# FASCICULE DE BREVET EUROPEEN

(11) **EP 3 501 791 B1**
(45) Date de publication et mention de la délivrance du brevet: **26.08.2020**
(21) Numéro de dépôt: 18211680.6
(22) Date de dépôt: 11.12.2018
(51) Int. Cl.: B29C 49/72, B29C 49/04, B29L 31/00

(54) **SYSTEME DE DECAROTTAGE**
SYSTEM ZUM ENTFERNEN VON EINEM ANGUSS
DEGATING SYSTEM

(30) Priorité: 21.12.2017 FR 1762821
(43) Date de publication de la demande: 26.06.2019
(73) Titulaire: Matissart Nord, 62113 Labourse (FR)
(72) Inventeur: ODE, Pascal, 92200 Neuilly sur Seine (FR); PAPILLON, Julien, 92380 Garches (FR)
(74) Mandataire: Plasseraud IP

(56) Documents cités:
- EP-A1- 1 561 559
- DE-A1- 10 245 413
- US-A- 5 202 135
- US-A1- 2006 065 619

## Description

L'invention est relative à un système de décarottage d'un produit moulé avec une poignée rentrante, ladite poignée étant située sous le niveau des épaules du produit moulé, ainsi qu'un procédé de décarottage mise en œuvre par un tel système de décarottage. Les documents US5202135A, DE10245413A1 et EP1561559A1 sont représentatifs de l'arrière plan technologique.

Le domaine de l'invention est celui de la fabrication de produit moulé par moulage par soufflage, et en particulier l'extrusion soufflage. L'invention trouvera une application particulière pour la fabrication de bidons à poignée rentrante, à savoir un bidon dont la poignée est située en retrait des épaules du bidon. Les bidons sont avantageusement empilables les uns sur les autres, par appui de leurs épaules respectives, sans que la poignée ne constitue une gêne à cet empilement.

Après démoulage, il est nécessaire de retirer les surplus de matières plastiques de l'extrusion soufflage, usuellement appelées carottes par l'homme du métier.
Dans le cas de bidon à poignées rentrantes, la carotte d'extrusion soufflage comprend une carotte supérieure qui s'étend en prolongement supérieure de la poignée, et une carotte inférieure qui obstrue le passage interne de la poignée, sous le niveau des épaules.

L'état de la technique connait ainsi des systèmes de décarottage automatisés qui permettent de détacher la carotte supérieure, puis la carotte inférieure, à savoir en deux temps.

Ce système comprend un décarotteur frontal solidaire d'un châssis qui vient écrêter la carotte supérieure sous l'action d'un vérin, et selon un mouvement de translation du châssis depuis une position rétractée vers une position déployée du châssis.

Ce système comprend encore un décarotteur de poignée, pivotant, solidaire en translation du châssis qui, dans la position déployée du châssis, est actionné en rotation depuis une position de dégagement vers une position où ce dernier descend sous les épaules et vient traverser l'ouverture interne de la poignée, en vue d'assurer le décarottage de la carotte inférieure.

La séquence de décarottage est exécutée en deux temps, avec premièrement le décarottage de la carotte supérieure sous l'action de translation du décarotteur frontal, puis le décarottage de la carotte inférieure sous l'action de la partie pivotante du système.

Selon les constatations de l'inventeur, et lors de cette deuxième étape, la carotte inférieure doit être éjectée par-dessus le décarotteur frontal (propulsé par la partie pivotante) pour assurer son évacuation. Dans certains cas, toutefois, l'obstacle que constitue le décarotteur frontal empêche la bonne éjection de la carotte inférieure qui reste alors sur les épaules du bidon : un tel défaut est à l'origine de perte dans le process de fabrication de bidons.
Le but de l'invention est de pallier les inconvénients précités en proposant un système de décarottage convenant pour décarottage de produits moulés à poignée rentrante, et limitant le nombre de défauts de production liés à la mauvaise évacuation de la carotte inférieure.
D'autres buts et avantages apparaitront au cours de la description qui n'est donnée qu'à titre indicatif.

Aussi l'invention concerne tout d'abord un système de décarottage d'un produit moulé avec une poignée, rentrante, située au-dessous des épaules du produit moulé, la poignée présentant un passage interne,
ledit système convenant pour le détachement d'une carotte supérieure s'étendant en prolongement de la poignée au-dessus des épaules du produit moulé, et le détachement d'une carotte inférieure obturant le passage interne de la poignée,
ledit système comprenant :
- un dispositif de maintien en position d'un produit moulé
- un châssis, ainsi qu'un premier actionneur pour le déplacement relatif translation du châssis par rapport au dispositif de maintien, ledit châssis portant :
   - un décarotteur frontal solidaire du châssis, et convenant pour entrer en contact avec la carotte supérieure et provoquer le détachement de la carotte supérieure lorsque le châssis est déplacé en translation relativement par rapport au dispositif de maintien depuis une position rétractée vers une position déployée,
   - un décarotteur de poignée, articulé au châssis et configuré pour passer d'une première position de dégagement pour laquelle ledit décarotteur de poignée est positionné au-dessus de la poignée du produit moulé, vers une position d'éjection pour laquelle le décarotteur de poignée est déplacé sous les épaules du produit moulé et jusqu'à une seconde position où le décarotteur de poignée traverse le passage interne de la poignée,
   ledit système étant configuré pour la mise en œuvre d'une séquence de décarottage comprenant les étapes suivantes :
   - une première étape de décarottage de la carotte supérieure par la mise en translation du châssis par rapport au dispositif de maintien de la position rétractée vers la position déployée au cours de laquelle le décarotteur frontal vient écrêter la carotte supérieure, et successivement, dans la position déployée du châssis,
   - une seconde étape de décarottage de la carotte inférieure par la mise en action du décarotteur de poignée de la première position de dégagement vers la seconde position provoquant l'éjection de la carotte inférieure.

Selon l'invention, le décarotteur frontal comprend une partie mobile articulée sur le châssis configurée pour passer d'une première position convenant pour l'écrêtage de la carotte supérieure lors de la première étape de décarottage de la carotte supérieure vers une deuxième position pour laquelle la partie mobile libère une ouverture de passage destinée à être traversée par la carotte inférieure lors de la deuxième étape de décarottage de la carotte inférieure.

Selon un mode de réalisation, un second actionneur provoque le passage du décarotteur de poignée de la première position de dégagement vers la position seconde position et dans lequel une unité de commande est configurée pour :
- commander la partie mobile dans la première position d'écrêtage lors de la première étape de décarottage de la carotte supérieure, et
- commander la partie mobile dans ladite seconde position lors de la deuxième étape de décarottage pour laquelle la partie mobile libère ladite ouverture de passage destinée à être traversée par la carotte inférieure lors de son éjection.

Selon des caractéristiques optionnelles de l'invention, prises seules ou en combinaison :
- le système comprend des moyens mécaniques pour synchroniser en rotation l'ensemble comprenant la partie mobile du décarotteur frontal et le décarotteur de poignée, l'ensemble étant commandé (notamment par ledit second actionneur) pour provoquer conjointement :
   - le passage de la partie mobile du décarotteur frontal de la première position convenant pour l'écrêtage de la carotte supérieure vers la seconde position pour laquelle la partie mobile libère ladite ouverture de passage et
   - la mise en rotation du décarotteur de poignée de la première position de dégagement vers la seconde position provoquant l'éjection de la carotte inférieure ;
   - le châssis comprend une base à partir de laquelle s'étendent en parallèle deux bras supports, et dans lequel le décarotteur frontal comprend ladite partie mobile, apte à venir obturer ladite ouverture de passage dans ladite première position d'écrêtage en s'étendant transversalement entre les bras supports et à libérer ladite ouverture de passage dans ladite seconde position ;
   - éventuellement le décarotteur frontal comprend outre la partie mobile, deux parties fixes solidaires respectivement solidaires des extrémités libres des bras, s'étendant respectivement vers l'intérieur entre les bras et définissant entre eux ladite ouverture de passage et ladite partie mobile est apte à venir obturer ladite ouverture de passage dans ladite première position d'écrêtage en prolongeant lesdites parties fixes, et à libérer ladite ouverture de passage dans ladite seconde position ;
- le système comprend un cavalier venant à cheval du décarotteur de poignée, les parois latérales du cavalier formant des parois configurées pour assurer le guidage de la carotte inférieure en direction et jusqu'à ladite ouverture de passage lors de l'éjection de la carotte inférieure ;
- le cavalier est formé d'une tôle pliée, ou de l'assemblage de plusieurs éléments rapportés ;
- le second actionneur est agencé notamment au travers d'une ouverture supérieure du cavalier (6) et solidaire de ce dernier ;
- le décarotteur de poignée et/ou la partie mobile du décarotteur frontal sont articulés aux parois latérales du cavalier.

L'invention concerne encore un procédé de décarottage d'un produit moulé avec une poignée, rentrante, située au-dessous des épaules du produit moulé, mise en œuvre par un système selon l'invention, ledit procédé comprenant :
- une première étape de décarottage de la carotte supérieure par la mise en translation du châssis par rapport au dispositif de maintien de la position rétractée vers la position déployée au cours de laquelle le décarotteur frontal vient écrêter la carotte supérieure, ladite partie mobile dans la première position d'écrêtage et successivement, dans la position déployée du châssis,
- une seconde étape de décarottage de la carotte inférieure par la mise en déplacement du décarotteur de poignée de la première position de dégagement vers la seconde position provoquant l'éjection de la carotte inférieure, la partie mobile étant déplacée dans la seconde position pour laquelle la partie mobile libère ladite ouverture de passage destinée à être traversée par la carotte inférieure lors de son éjection.

Selon un mode de réalisation le procédé met en œuvre un capteur de présence, sans contact, ciblant l'ouverture de passage et configuré pour détecter le passage de la carotte inférieure lors de son éjection,
ledit procédé comprenant :
- une étape de surveillance du signal du capteur de présence,
- une étape d'émission d'un défaut lorsque le signal du capteur ne témoigne d'aucune présence pendant la période de temps de la seconde étape de décarottage pour laquelle l'ouverture de passage est libérée par la partie mobile.

L'invention sera mieux comprise à la lecture de la description suivante accompagnée des dessins en annexe, parmi lesquels :
- La figure 1 est une photo d'une illustration de la partie supérieure d'un bidon avec poignée rentrante, après démoulage du moule d'extrusion soufflage, illustrant la carotte supérieure et la carotte inférieure s'étendant respectivement au-dessus et au-dessous de la poignée.
- Les figures 2a et 2b sont deux illustrations successives lors de la mise en œuvre de la première étape de décarottage de la carotte supérieure, illustrant le système respectivement dans la position rétractée et la position déployée du châssis.
- Les figures 3a et 3b sont deux illustrations successives lors de la mise en œuvre de la deuxième étape de décarottage de la carotte inférieure, la figure 3b illustrant plus particulièrement l'ouverture de passage facilitant l'évacuation de la carotte inférieure lors de son éjection.

Aussi l'invention est relative à un système de décarottage 1 d'un produit moulé B avec une poignée P, rentrante, située au-dessous des épaules Ep du produit moulé, la poignée présentant un passage interne.

Le produit moulé peut être typiquement un bidon obtenu par le procédé d'extrusion soufflage. Après démoulage, une carotte supérieure Cs s'étend en prolongement de la poignée au-dessus des épaules Ep du produit moulé, et une carotte inférieure Ci obturant le passage interne de la poignée Pg, au-dessous des épaules du bidon.

Ledit système est prévu pour le détachement de la carotte supérieure Cs s'étendant en prolongement de la poignée au-dessus des épaules Ep du produit moulé, et le détachement de la carotte inférieure Ci obturant le passage interne de la poignée.

A cet effet, ledit système 1 comprend :
- un dispositif de maintien en position du produit moulé (non illustré), bien connu de l'homme du métier,
- un châssis 2 en translation, ainsi qu'un premier actionneur pour déplacement en translation du châssis par rapport au dispositif de maintien, ledit châssis mobile portant :
   - un décarotteur frontal 3 solidaire du châssis, et convenant pour entrer en contact avec la carotte supérieure Cs et provoquer le détachement de la carotte supérieure lorsque le châssis 2 est déplacé en translation depuis une position rétractée P21 vers une position déployée P22,
   - un décarotteur de poignée 4, articulé au châssis et configuré pour passer d'une première position de dégagement P41 pour laquelle ledit décarotteur de poignée 4 est positionné au-dessus de la poignée du produit moulé, vers une position d'éjection pour laquelle le décarotteur de poignée 4 est déplacé sous les épaules Ep du produit moulé et jusqu'à une seconde position P42 où le décarotteur de poignée 5 traverse le passage interne de la poignée Pg.

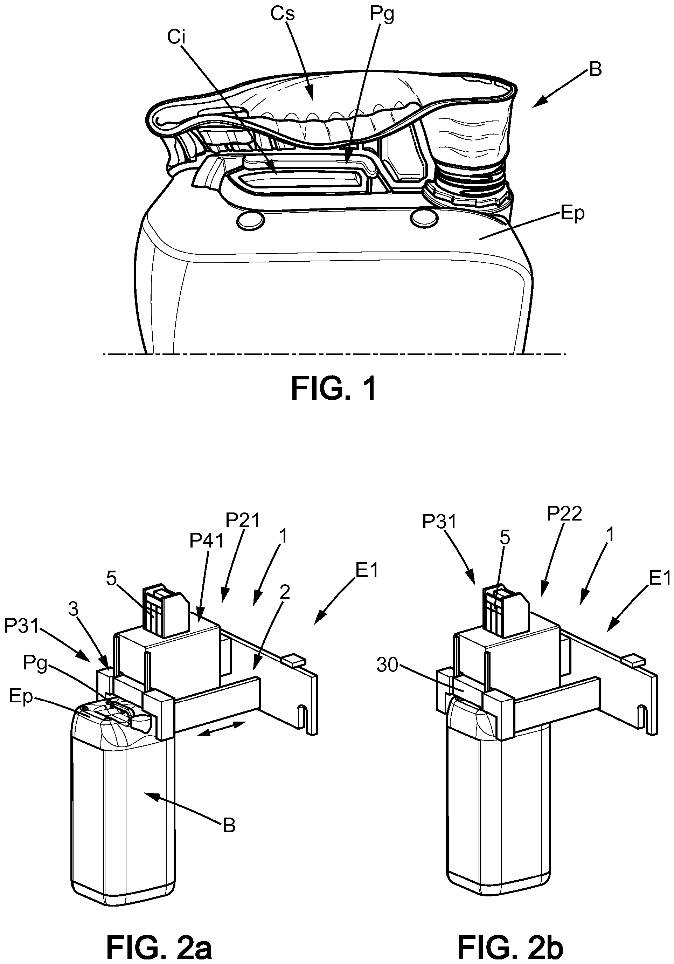

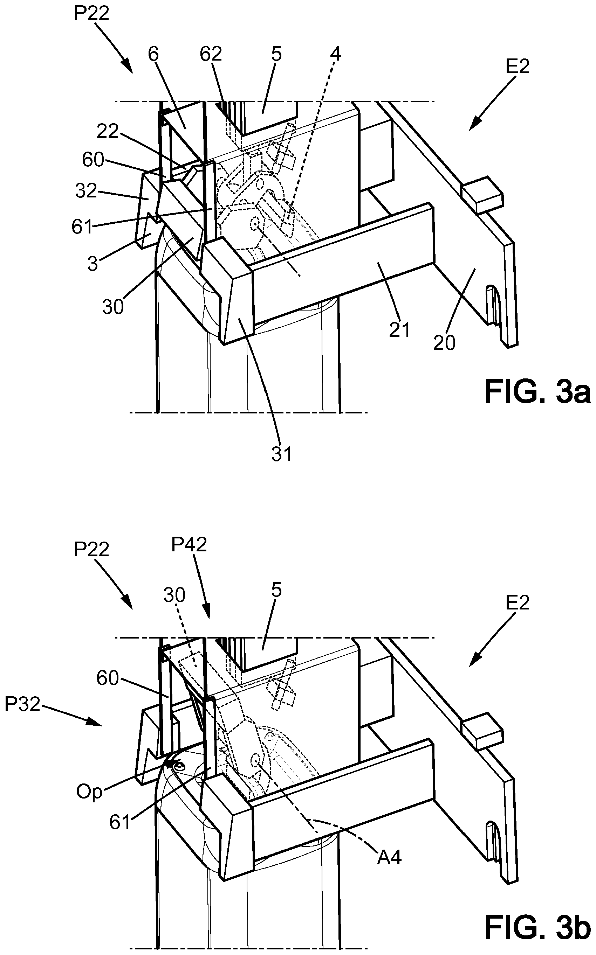

Le système est configuré pour la mise en œuvre d'une séquence de décarottage
comprenant les étapes suivantes :
- une première étape de décarottage E1 de la carotte supérieure par la mise en translation du châssis 2 par rapport au dispositif de maintien de la position rétractée P21 vers la position déployée P22 au cours de laquelle le décarotteur frontal 3 vient écrêter la carotte supérieure Cs (étape illustrée plus particulièrement aux figures 2a et 2b), et successivement, dans la position déployée du châssis P22,
- une seconde étape de décarottage E2 de la carotte inférieure Ca par la mise en action du décarotteur de poignée 4 de la première position de dégagement P41 vers la seconde position P42 provoquant l'éjection de la carotte inférieure Ci, (étape illustrée plus particulièrement aux figures 3a et 3b).

De manière générale, le châssis peut être mobile, par exemple embarqué sur le moule du produit moulé, le porte-moule. Le châssis peut encore être fixe, fixé sur la bâti de la machine, le déplacement relatif étant obtenu par le déplacement du dispositif de maintien (couramment appelé masque de reprise par l'homme du métier). Dans tous les cas, l'important est de pouvoir déplacer relativement le dispositif de maintien par rapport au châssis, que le châssis soit effectivement mobile ou non.

De manière notable et selon l'invention, le décarotteur frontal 3 comprend une partie mobile 30 articulée sur le châssis, par exemple sous l'action d'un actionneur. Cette partie mobile 30 est configurée pour passer d'une première position P31 convenant pour l'écrêtage de la carotte supérieure lors de la première étape de décarottage E1 de la carotte supérieure Cs vers une deuxième position P32 pour laquelle la partie mobile libère une ouverture de passage Op destinée à être traversée par la carotte inférieure lors de la deuxième étape de décarottage (E2) de la carotte inférieure Ci..
Avantageusement, et selon l'invention, la partie mobile 30 permet avantageusement de libérer ladite ouverture de passage ce qui facilite l'évacuation de la carotte inférieure ; le décarotteur frontal ne constitue plus un obstacle pour l'évacuation de la carotte inférieure, nécessitant l'éjection de la carotte par-dessus cet obstacle : au contraire il est même possible de rapprocher au plus près le décarotteur frontal 3 et le décarotteur de poignée 4.

Selon un mode de réalisation, un second actionneur 5 provoque le passage du décarotteur de poignée 4, de la première position de dégagement P41 vers la position seconde position P42.
Eventuellement une unité de commande est configurée pour :
- commander la partie mobile 30 dans la première position d'écrêtage P31 lors de la première étape de décarottage E1 de la carotte supérieure, et tel qu'illustré aux figures 2a et 2b et
- commander la partie mobile 30 dans ladite seconde position P32 lors de la deuxième étape de décarottage E2 pour laquelle la partie mobile 30 libère ladite ouverture de passage Op destinée à être traversée par la carotte inférieure lors de son éjection, et tel qu'illustré aux figures 3a et 3b.

Alternativement (et selon un mode de réalisation non illustré), il peut être envisagé que le déplacement de la partie mobile 30 soit provoqué par une came solidaire du dispositif de maintien, et le partie mobile présentant un suiveur de came coopérant avec la came en fin de course du mouvement de translation de châssis par rapport au dispositif (de maintien depuis la position rétractée vers la position déployée pour provoquer le déplacement de la première position de dégagement P41 vers la position seconde position P42.

La partie mobile peut être articulée au châssis suivant un axe de pivot, et le décarotteur de poignée au châssis suivant un axe de pivot.

Alternativement et selon un mode de réalisation, la partie mobile 30 du décarotteur frontal 3 et le décarotteur de poignée 4 peuvent être déplacés par un même actionneur : à cet effet le système peut comprendre des moyens mécaniques pour synchroniser en rotation l'ensemble comprenant la partie mobile 30 du décarotteur frontal 3 et le décarotteur de poignée 4, l'ensemble étant commandé par ledit second actionneur 5 pour provoquer conjointement :
- le passage de la partie mobile 30 du décarotteur frontal de la première position P31 convenant pour l'écrêtage de la carotte supérieure vers la seconde position P32 pour laquelle la partie mobile libère ladite ouverture de passage Op et
- la mise en rotation du décarotteur de poignée 4 de la première position de dégagement P41 vers la seconde position P41 provoquant l'éjection de la carotte inférieure.

Le décarotteur de poignée et la partie mobile 30 du décarotteur frontal peuvent être constitués par deux éléments solidaires rigidement l'un de l'autre, et s'étendant de part et d'autre d'un axe de pivot A4 de l'ensemble.
Le châssis 2 peut comprendre une base 20 à partir de laquelle s'étendent en parallèle deux bras supports 21, 22.

Le décarotteur frontal comprend ladite partie mobile 30, apte à venir obturer ladite ouverture de passage dans ladite première position d'écrêtage P31 en s'étendant transversalement entre les bras supports 21,22 et à libérer ladite ouverture de passage Op dans ladite seconde position P32.

Le décarotteur frontal 3 peut comprendre outre la partie mobile 30 :
- deux parties fixes 31,32, notamment en forme d'équerre, solidaires respectivement solidaires des extrémités libres des bras support 21,22, s'étendant respectivement vers l'intérieur entre les bras et définissant entre eux un inter-espace formant ladite ouverture de passage Op,
- ladite partie mobile 30 apte à venir obturer ladite ouverture de passage Op dans ladite première position d'écrêtage P31 en prolongeant lesdites parties fixes 31,32, et à libérer ladite ouverture de passage Op dans ladite seconde position P32.

Alternativement et selon un mode de réalisation non illustré, le décarotteur frontal est constitué essentiellement par la partie mobile qui s'étend transversalement sur toute la longueur entre les bras supports 21,22.

La base 20 est solidaire d'un chariot (non illustré) apte à déplacer le châssis suivant la direction des bras support 20,21 sous l'action du premier actionneur tel que par exemple un vérin pneumatique. Lors de cette action, le décarotteur frontal 3 se déplace au-dessus de la poignée Pg du produit moulé B, rentrant en contact avec la carotte supérieure Cs, la course du chariot étant suffisante pour la détacher par effet de cisaillement.
On remarque encore que des parois latérales 60 et 61 sensiblement verticales, peuvent être disposées, entre les bras supports 21,22 et le décarotteur de poignée 4, de part et d'autre du décarotteur de poignée 4. Ces parois latérales 60,61 assurent le guidage de la carotte inférieure Ci jusqu'à l'ouverture de passage Op libérée par la partie mobile 30 lors de son éjection.
Ainsi ces parois 60,61 peuvent être formées par les parois latérales d'un cavalier 6 venant à cheval du décarotteur de poignée 4, les parois latérales 60,61 du cavalier formant des parois configurées pour assurer le guidage de la carotte inférieure Ci en direction et jusqu'à ladite ouverture de passage Op lors de l'éjection de la carotte inférieure Ci.
Le cavalier 6 peut être formé par une tôle pliée en U inversé dont les deux extrémités sont liées aux bras supports 21, 22, en encore résulter de l'assemblage de plusieurs éléments rapportés. On remarque que le décarotteur de poignée 4 et/ou la partie mobile 30 du décarotteur frontal sont articulés aux parois latérales 60, 61 du cavalier, par exemple suivant un axe de pivot A4.
Le second actionneur 5 peut être prévu agencé notamment (à titre d'exemple non limitatif) au travers d'une ouverture supérieure 62 du cavalier 6 et être solidaire du cavalier.
L'invention concerne encore un procédé de décarottage d'un produit moulé avec une poignée, rentrante, située au-dessous des épaules Ep du produit moulé B, mise en œuvre par un système selon l'invention, ledit procédé comprenant :
- une première étape de décarottage E1 de la carotte supérieure Cs par la mise en translation du châssis 2 de la position rétractée P21 vers la position déployée P22 au cours de laquelle le décarotteur frontal 3 vient écrêter la carotte supérieure Cs, ladite partie mobile 30 alors dans la première position d'écrêtage P31 (voir figures 2a et 2b) et successivement, dans la position déployée P22 du châssis,
- une seconde étape de décarottage E2 de la carotte inférieure Ci par la mise en action (notamment par rotation) du décarotteur de poignée 4 de la première position de dégagement P41 vers la seconde position P42 provoquant l'éjection de la carotte inférieure Ci, la partie mobile 30 étant déplacée dans la seconde position P32 pour laquelle la partie mobile 30 libère ladite ouverture de passage Op destinée à être traversée par la carotte inférieure Ci lors de son éjection (Figure 3a et 3b).

Avantageusement, le procédé peut prévoir encore la surveillance de la bonne évacuation de la carotte inférieure, qui est susceptible de rester bloquée sur les épaules du produit moulé (en cas de mauvaise éjection ou de mauvaise découpe).

Ce mode de réalisation met en œuvre un capteur de présence, sans contact ciblant l'ouverture de passage Op et configuré pour détecter le passage de la carotte inférieure Ci lors de son éjection.

Ledit procédé comprend alors avantageusement :
- une étape de surveillance du signal du capteur de présence,
- une étape d'émission d'un défaut lorsque le signal du capteur ne témoigne d'aucune présence pendant la période de temps de la seconde étape de décarottage E2 pour laquelle l'ouverture de passage Op est libérée par la partie mobile 30. La non détection d'une présence pendant cette période témoigne que la carotte inférieure n'a pas traversée l'ouverture de passage, et donc qu'elle n'a pas été évacuée correctement par l'action du décarotteur de poignée 4.

Dans un tel cas, le produit moulé pour lequel un défaut a été émis pourra être évacué de la ligne de production.

### NOMENCLATURE

### Système de décarottage :

1. Système de décarottage,
2. Châssis mobile,
   20. Base,
   21,22 Bras support,
P21. Position rétractée du châssis mobile (Figure 2a)
P22. Position déployée du châssis mobile (Figures 2b, 3a et 3b)
3. Décarotteur frontal,
   30. Partie mobile,
   31,32. Parties fixes,
4. Décarotteur de la poignée
P41. Position de dégagement du décarotteur pivotant,
P42. Position d'éjection du décarotteur pivotant.
5. Second actionneur (décarotteur pivotant),
6. Cavalier,
   60, 61 Parois latérales cavalier,
Op ouverture de passage
A4. Axe de pivot de l'ensemble décarotteur pivotant 4/partie mobile 30 du décarotteur frontal 3.

### Produit moulé

B. Produit moulé notamment bidon,
Ep. Epaules,
Pg Poignée,
Cs. Carotte supérieure,
Ci. Carotte inférieure.

## Revendications

1. Système de décarottage (1) d'un produit moulé (B) avec une poignée (Pg), rentrante, située au-dessous des épaules (Ep) du produit moulé, la poignée présentant un passage interne,
ledit système convenant pour le détachement d'une carotte supérieure (Cs) s'étendant en prolongement de la poignée au-dessus des épaules (Ep) du produit moulé, et le détachement d'une carotte inférieure (Ci) obturant le passage interne de la poignée, ledit système (1) comprenant :
- un dispositif de maintien en position d'un produit moulé
- un châssis (2), ainsi qu'un premier actionneur pour le déplacement relatif en translation du châssis par rapport au dispositif de maintien, ledit châssis portant :
- un décarotteur frontal (3) solidaire du châssis, et convenant pour entrer en contact avec la carotte supérieure (Cs) et provoquer le détachement de la carotte supérieure lorsque le châssis (2) est déplacé en translation relativement par rapport au dispositif de maintien depuis une position rétractée (P21) vers une position déployée (P22),
- un décarotteur de poignée (4), articulé au châssis et configuré pour passer, d'une première position de dégagement (P41) pour laquelle ledit décarotteur de poignée (4) est positionné au-dessus de la poignée du produit moulé, vers une position d'éjection pour laquelle le décarotteur de poignée (4) est déplacé sous les épaules (Ep) du produit moulé et jusqu'à une seconde position (P42) où le décarotteur de poignée traverse le passage interne de la poignée (Pg),
le système étant configuré pour la mise en œuvre d'une séquence de décarottage comprenant les étapes suivantes :
- une première étape de décarottage (E1) de la carotte supérieure (Cs) par la mise en translation du châssis (2) par rapport au dispositif de maintien de la position rétractée (P21) vers la position déployée (P22) au cours de laquelle le décarotteur frontal (3) vient écrêter la carotte supérieure (Cs), et successivement, dans la position déployée du châssis (P22),
- une seconde étape de décarottage (E2) de la carotte inférieure (Ci) par la mise en action du décarotteur de poignée(4) de la première position de dégagement (P41) vers la seconde position (P42) provoquant l'éjection de la carotte inférieure (Ci), **caractérisé en ce que** le décarotteur frontal (3) comprend une partie mobile (30) articulée sur le châssis configurée pour passer d'une première position (P31) convenant pour l'écrêtage de la carotte supérieure lors de la première étape de décarrottage (E1) de la carotte supérieure vers une deuxième position (P32) pour laquelle la partie mobile libère une ouverture de passage (Op) destinée à être traversée par la carotte inférieure lors de la deuxième étape de décarottage (E2) de la carotte inférieure (Ci).

2. Dispositif selon la revendication 1, dans lequel un second actionneur (5) provoque le passage du décarotteur de poignée (4), de la première position de dégagement (P41) vers la position seconde position (P42) et dans lequel une unité de commande est configurée pour :
- commander la partie mobile (30) dans la première position d'écrêtage (P31) lors de la première étape de décarottage (E1) de la carotte supérieure, et
- commander la partie mobile (30) dans ladite seconde position (P32) lors de la deuxième étape de décarottage pour laquelle la partie mobile (30) libère ladite ouverture de passage (Op) destinée à être traversée par la carotte inférieure lors de son éjection.

3. Système selon la revendication 1 ou 2, présentant des moyens mécaniques pour synchroniser en rotation l'ensemble comprenant la partie mobile (30) du décarotteur frontal (3) et le décarotteur de poignée (4), l'ensemble étant commandé pour provoquer conjointement :
- le passage de la partie mobile (30) du décarotteur frontal de la première position (P31) convenant pour l'écrêtage de la carotte supérieure vers la seconde position (P32) pour laquelle la partie mobile libère ladite ouverture de passage (Op) et
- la mise en rotation du décarotteur de poignée (4) de la première position de dégagement (P41) vers la seconde position (P42) provoquant l'éjection de la carotte inférieure.

4. Système selon l'une des revendications 1 à 3, dans lequel le châssis (2) comprend une base (20) à partir de laquelle s'étendent en parallèle deux bras supports (21, 22), et dans lequel le décarotteur frontal comprend ladite partie mobile (30), apte à venir obturer ladite ouverture de passage dans ladite première position d'écrêtage (P31) en s'étendant transversalement entre les bras supports (21,22) et à libérer ladite ouverture de passage (Op) dans ladite seconde position (P32).

5. Système selon la revendication 4 dans lequel le décarotteur frontal comprend outre la partie mobile :
- deux parties fixes (31,32) solidaires respectivement solidaires des extrémités libres des bras (21,22), s'étendant respectivement vers l'intérieur entre les bras et définissant entre eux ladite ouverture de passage (Op).
- ladite partie mobile (30) apte à venir obturer ladite ouverture de passage dans ladite première position d'écrêtage (P31) en prolongeant lesdites parties fixes (31,32), et à libérer ladite ouverture de passage (Op) dans ladite seconde position (P32).

6. Système selon l'une des revendications 1 à 5, comprenant une cavalier (6) venant à cheval du décarotteur de poignée (4), les parois latérales (60,61) du cavalier formant des parois configurées pour assurer le guidage de la carotte inférieure (Ci) en direction et jusqu'à ladite ouverture de passage (Op) lors de l'éjection de la carotte inférieure (Ci).

7. Système selon la revendication 6, dans lequel le cavalier (6) est formé d'une tôle pliée, ou de l'assemblage de plusieurs éléments rapportés.

8. Système selon l'une des revendications 6 ou 7, dans lequel le décarotteur de poignée et/ou la partie mobile du décarotteur frontal sont articulés aux parois latérales (60, 61) du cavalier (6).

9. Procédé de décarottage d'un produit moulé avec une poignée (P), rentrante, située au-dessous des épaules (Ep) du produit moulé, mise en œuvre par un système selon l'une des revendications 1 à 8, ledit procédé comprenant :
- une première étape de décarottage (E1) de la carotte supérieure (Cs) par la mise en translation du châssis (2) par rapport au dispositif de maintien de la position rétractée (P21) vers la position déployée (P22) au cours de laquelle le décarotteur frontal (3) vient écrêter la carotte supérieure, ladite partie mobile (30) dans la première position d'écrêtage (P31) et successivement, dans la position déployée (P22) du châssis,
- une seconde étape de décarottage (E2) de la carotte inférieure (Ci) par la mise en déplacement du décarotteur de poignée (4) de la première position de dégagement (P41) vers la seconde position (P42) provoquant l'éjection de la carotte inférieure (Ci), la partie mobile (30) étant déplacée dans la seconde position (P32) pour laquelle la partie mobile (30) libère ladite ouverture de passage (Op) destinée à être traversée par la carotte inférieure (Ci) lors de son éjection.

10. Procédé de décarottage selon la revendication 9 mettant en œuvre un capteur de présence, sans contact, ciblant l'ouverture de passage Op et configuré pour détecter le passage de la carotte inférieure (Ci) lors de son éjection
ledit procédé comprenant :
- une étape de surveillance du signal du capteur de présence,
- une étape d'émission d'un défaut lorsque le signal du capteur ne témoigne d'aucune présence pendant la période de temps de la seconde étape de décarottage pour laquelle l'ouverture de passage (Op) est libérée par la partie mobile (30).

## Patentansprüche

1. Angussentfernungssystem (1) eines geformten Produkts (B) mit einem einfahrenden Griff (Pg), der unter Schultern (Ep) des geformten Produkts liegt, wobei der Griff einen Innendurchgang aufweist,
wobei das System für das Lösen eines oberen Angusses (Cs), der sich in Verlängerung des Griffs über den Schultern (Ep) des geformten Produkts erstreckt, und für das Lösen eines unteren Angusses (Ci), der den Innendurchgang des Griffs verschließt, geeignet ist, wobei das System (1) umfasst:
- eine Positionshaltevorrichtung eines geformten Produkts
- ein Chassis (2) sowie einen ersten Aktuator für das relative Verlagern des Chassis in Verschiebung in Bezug auf die Haltevorrichtung, wobei das Chassis trägt:
- einen frontalen Angussentferner (3), der fest mit dem Chassis verbunden ist und geeignet ist, um mit dem oberen Anguss (Cs) in Kontakt zu treten und das Lösen des oberen Angusses zu bewirken, wenn das Chassis (2) in Verschiebung in Bezug auf die Haltevorrichtung von einer eingefahrenen Position (P21) zu einer ausgefahrenen Position (P22) verlagert wird,
- einen Griffangussentferner (4), der an dem Chassis angelenkt und ausgelegt ist, um von einer ersten Ausrückposition (P41), für die der Griffangussentferner (4) über dem Griff des geformten Produkts positioniert ist, zu einer Auswurfposition überzugehen, für die der Griffangussentferner (4) unter die Schultern (Ep) des geformten Produkts und bis zu einer zweiten Position (P42) verlagert wird, in der der Griffangussentferner den Innendurchgang des Griffs (Pg) durchquert,
wobei das System für die Umsetzung einer Angussentfernungssequenz ausgelegt ist, die die folgenden Schritte umfasst:
- einen ersten Angussentfernungsschritt (E1) des oberen Angusses (Cs) durch Versetzen des Chassis (2) in Verschiebung in Bezug auf die Haltevorrichtung von der eingefahrenen Position (P21) zu der ausgefahrenen Position (P22), in dessen Verlauf der frontale Angussentferner (3) den oberen Anguss (Cs) kappt, und sukzessiv in die ausgefahrene Position (P22) des Chassis,
- einen zweiten Angussentfernungsschritt (E2) des unteren Angusses (Ci) durch Inbetriebversetzen des Griffangussentferners (4) von der ersten Ausrückposition (P41) zu der zweiten Position (P42), das den Auswurf des unteren Angusses (Ci) bewirkt, **dadurch gekennzeichnet, dass** der frontale Angussentferner (3) einen beweglichen Teil (30) umfasst, der auf dem Chassis angelenkt ist, der ausgelegt ist, um von einer ersten Position (P31), die für das Kappen des oberen Angusses bei dem ersten Angussentfernungsschritt (E1) des oberen Angusses geeignet ist, zu einer zweiten Position (P32) überzugehen, für die der bewegliche Teil eine Durchgangsöffnung (Op) freigibt, die dazu bestimmt ist, von dem unteren Anguss bei dem zweiten Angussentfernungsschritt (E2) des unteren Angusses (Ci) durchquert zu werden.

2. Vorrichtung nach Anspruch 1, wobei ein zweiter Aktuator (5) das Übergehen des Griffangussentferners (4) von der ersten Ausrückposition (P41) zu der zweiten Position (P42) bewirkt, und wobei eine Steuereinheit ausgelegt ist, um:
- den beweglichen Teil (30) in die erste Kappposition (P31) bei dem ersten Angussentfernungsschritt (E1) des oberen Angusses zu steuern, und
- den beweglichen Teil (30) in die zweite Position (P32) bei dem zweiten Angussentfernungsschritt zu steuern, für den der bewegliche Teil (30) die Durchgangsöffnung (Op), die dazu bestimmt ist, von dem unteren Anguss bei seinem Auswurf durchquert zu werden, freigibt.

3. System nach Anspruch 1 oder 2, das mechanische Mittel aufweist, um die Baugruppe, die den beweglichen Teil (30) des frontalen Angussentferners (3) umfasst, und den Griffangussentferner (4) in Drehung zu synchronisieren, wobei die Baugruppe gesteuert wird, um gleichzeitig Folgendes zu bewirken:
- das Übergehen des beweglichen Teils (30) des frontalen Angussentferners von der ersten Position (P31), die für das Kappen des oberen Angusses geeignet ist, zu der zweiten Position (P32), für die der bewegliche Teil die Durchgangsöffnung (Op) freigibt, und
- das Indrehungversetzen des Griffangussentferners (4) von der ersten Ausrückposition (P41) zu der zweiten Position (P42), das den Auswurf des unteren Angusses bewirkt.

4. System nach einem der Ansprüche 1 bis 3, wobei das Chassis (2) eine Basis (20) umfasst, von der ausgehend sich zwei Tragarme (21, 22) parallel erstrecken, und wobei der frontale Angussentferner den beweglichen Teil (30) umfasst, der dazu geeignet ist, die Durchgangsöffnung in der ersten Kappposition (P31) zu verschließen, indem er sich quer zwischen den Tragarmen (21, 22) erstreckt, und die Durchgangsöffnung (Op) in der zweiten Position (P32) freizugeben.

5. System nach Anspruch 4, wobei der frontale Angussentferner zusätzlich zu dem beweglichen Teil umfasst:
- zwei stationäre Teile (31, 32), die jeweils mit freien Enden der Arme (21, 22) fest verbunden sind, die sich jeweils zu dem Inneren zwischen den Armen erstrecken und zwischen einander die Durchgangsöffnung (Op) definieren,
- wobei der bewegliche Teil (30) dazu geeignet ist, die Durchgangsöffnung in der ersten Kappposition (P31) zu verschließen, indem die stationären Teile (31, 32) verlängert werden, und die Durchgangsöffnung (Op) in der zweiten Position (P32) freizugeben.

6. System nach einem der Ansprüche 1 bis 5, das einen Aufsatz (6) umfasst, der rittlings auf dem Griffangussentferner (4) zu sitzen kommt, wobei die Seitenwände (60, 61) des Aufsatzes Wände bilden, die ausgelegt sind, um die Führung des unteren Angusses (Ci) in Richtung und bis zu der Durchgangsöffnung (Op) bei dem Auswurf des unteren Angusses (Ci) sicherzustellen.

7. System nach Anspruch 6, wobei der Aufsatz (6) aus einem gefalteten Blech oder der Zusammenfügung mehrerer angebauter Elemente gebildet ist.

8. System nach einem der Ansprüche 6 oder 7, wobei der Griffangussentferner und/oder der bewegliche Teil des frontalen Angussentferners an den Seitenwänden (60, 61) des Aufsatzes (6) angelenkt sind.

9. Verfahren zum Angussentfernen eines geformten Produkts mit einem einfahrenden Griff (P), der unter Schultern (Ep) des geformten Produkts liegt, das durch ein System nach einem der Ansprüche 1 bis 8 umgesetzt wird, wobei das Verfahren umfasst:
- einen ersten Angussentfernungsschritt (E1) des oberen Angusses (Cs) durch Versetzen des Chassis (2) in Verschiebung in Bezug auf die Haltevorrichtung von der eingefahrenen Position (P21) zu der ausgefahrenen Position (P22), in dessen Verlauf der frontale Angussentferner (3) den oberen Anguss kappt, der bewegliche Teil (30) in der ersten Kappposition (P31) und sukzessiv in der aus dem Chassis ausgefahrenen Position (P22),
- einen zweiten Angussentfernungsschritt (E2) des unteren Angusses (Ci) durch Verlagern des Griffangussentferners (4) von der ersten Ausrückposition (P41) zu der zweiten Position (P42), das den Auswurf des unteren Angusses (Ci) bewirkt, wobei der bewegliche Teil (30) in die zweite Position (P32) verlagert wird, für die der bewegliche Teil (30) die Durchgangsöffnung (Op), die dazu bestimmt ist, von dem unteren Anguss (Ci) bei seinem Auswurf durchquert zu werden, freigibt.

10. Verfahren zum Angussentfernen nach Anspruch 9, das einen kontaktlosen Anwesenheitssensor umsetzt, der auf die Durchgangsöffnung Op abzielt und ausgelegt ist, um das Durchgehen des unteren Angusses (Ci) bei seinem Auswurf zu erfassen, wobei das Verfahren umfasst:
- einen Überwachungsschritt des Signals des Anwesenheitssensors,
- einen Sendeschritt eines Fehlers, wenn das Signal des Sensors keine Anwesenheit während der Zeitspanne des zweiten Angussentfernungsschritts, für den die Durchgangsöffnung (Op) von dem beweglichen Teil (30) freigegeben wird, meldet.

## Claims

1. System for degating (1) a moulded product (B) with a retractable handle (Pg) located below the shoulders (Ep) of the moulded product, the handle having an inner passage,
said system being suitable for the detachment of an upper gate (Cs) extending in extension of the handle above the shoulders (Ep) of the moulded product, and the detachment of a lower gate (Ci) blocking the internal passage of the handle,
said system (1) comprising:
- a device for holding a moulded product in position,
- a frame (2), as well as a first actuator for the relative displacement in translation of the frame relative to the supporting device, said frame supporting:
- a front degater (3) joined to the frame, and suitable for coming into contact with the upper gate (Cs) and causing the detachment of the upper gate when the frame (2) is moved in translation relative to the supporting device from a retracted position (P21) to an extended position (P22),
- a handle degater (4), articulated with the frame and configured to pass from a first disengagement position (P41) for which said handle degater (4) is positioned above the handle of the moulded product to an ejection position for which the handle degater (4) is displaced below the shoulders (Ep) of the moulded product and up to a second position (P42) where the handle degater traverses the internal passage of the handle (Pg),
the system being configured for the implementation of a degating sequence comprising the following steps:
- a first degating step (E1) of the upper gate (Cs) by setting into translation the frame (2) relative to the device for holding the retracted position (P21) to the extended position (P22), during which the front degater (3) clips the upper gate (Cs), and in succession, in the extended position of the frame (P22),
- a second step of degating (E2) the lower gate (Ci) by activating the handle degater (4) from the first disengagement position (P41) to the second position (P42) causing the ejection of the lower gate (Ci),
**characterised in that** the front degater (3) comprises a movable part (30) articulated with the frame which is configured to pass from a first position (P31) suitable for clipping the upper gate during the first degating step (E1) of the upper gate to a second position (P32) for which the movable part frees a passage opening (Op) designed to be traversed by the lower gate during the second degating step (E2) of the lower gate (Ci).

2. Device according to claim 1, wherein a second actuator (5) causes the passage of the handle degater (4), from the first disengagement position (P41) to the second position (P42) and wherein a control unit is configured to:
- control the movable part (30) in the first clipping position (P31) during the first degating step (E1) of the upper gate, and
- control the movable part (30) in said second position (P32) during the second degating step for which the movable part (30) frees said passage opening (Op) designed to be traversed by the lower gate during its ejection.

3. System according to claim 1 or 2, having mechanical means for synchronising in rotation the assembly comprising the movable part (30) of the front degater (3) and the handle degater (4), the assembly being controlled to bring about jointly:
- the passage of the movable part (30) of the front degater from the first position (P31) suitable for clipping the upper gate towards the second position (P32) for which the movable part frees said passage opening (Op) and
- setting into rotation the handle degater (4) from the first disengagement position (P41) towards the second position (P42) causing the ejection of the lower gate.

4. System according to any of claims 1 to 3, wherein the frame (2) comprises a base (20) from which two supports arms extend in parallel (21, 22), and wherein the front degater comprises said movable part (30), able to block said passage opening in said first clipping position (P31) by extending transversely between the supports arms (21, 22) and to free said passage opening (Op) in said second position (P32).

5. System according to claim 4, wherein the front degater also comprises the movable part:
- two fixed parts (31, 32) connected respectively to the free ends of the arms (21, 22), extending respectively towards the interior between the arms and defining between them said passage opening (Op).
- said movable part (30) being able to block said passage opening in said first clipping position (P31) by extending said fixed parts (31, 32), and freeing said passage opening (Op) in said second position (P32).

6. System according to any of claims 1 to 5, comprising a jumper (6) straddling the handle degater (4), the lateral walls (60, 61) of the jumper forming walls configured to ensure the guiding of the lower gate (Ci) in the direction and up to said passage opening (Op) during the ejection of the lower gate (Ci).

7. System according to claim 6, wherein the jumper (6) is made from a folded metal sheet, or from the assembly of a plurality of attachments.

8. System according to any of claims 6 or 7, wherein the handle degater and/or the movable part of the front degater are articulated with the lateral walls (60, 61) of the jumper (6).

9. Method of degating a moulded product with a retractable handle (P), located below the shoulders (Ep) of the moulded product, performed by a system according to any of claims 1 to 8, said method comprising:
- a first step of degating (E1) the upper gate (Cs) by moving in translation the frame (2) relative to the device for holding in the retracted position (P21) towards the extended position (P22) during which the front degater (3) clips the upper gate, said movable part (30) in the first clipping position (P31) and in succession, in the extended position (P22) of the frame,
- a second step of degating (E2) the lower gate (Ci) by displacing the degater handle (4) from the first disengagement position (P41) towards the second position (P42) causing the ejection of the lower gate (Ci), the movable part (30) being displaced into the second position (P32) for which the movable part (30) frees said passage opening (Op) designed to be traversed by the lower gate (Ci) during its ejection.

10. Method of degating according to claim 9, implementing a contactless presence sensor targeting the passage opening Op and configured to detect the passage of the lower gate (Ci) during its ejection,
said method comprising:
- a step of monitoring the signal of the presence sensor,
- a step of emitting an error when the sensor signal does not indicate any presence during the period of time of the second degating step for which the passage opening (Op) is freed by the movable part (30).
